# FASCICULE DE BREVET EUROPEEN

(11) **EP 0 362 320 B1**
(45) Date de publication et mention de la délivrance du brevet: **10.11.1993**
(21) Numéro de dépôt: 89902789.0
(22) Date de dépôt: 16.02.1989
(51) Int. Cl.: C01G 5/00

(54) **PROCEDE DE FABRICATION D'ALLIAGE D'ARGENT NOIRCI DANS LA MASSE**
VERFAHREN ZUR ERZEUGUNG EINER IN DER MASSE GESCHWÄRZTEN SILBERLEGIERUNG
PROCESS FOR MANUFACTURING INTEGRALLY-BLACKENED SILVER ALLOY

(30) Priorité: 07.03.1988 FR 8802879
(43) Date de publication de la demande: 11.04.1990
(73) Titulaire: VACHEY, Lucien, F-75017 Paris (FR)
(72) Inventeur: VACHEY, Lucien, F-75017 Paris (FR)
(74) Mandataire: Rodhain, Claude
(86) Numéro de dépôt international: FR8900057
(87) Numéro de publication internationale: WO8908612

(56) Documents cités:
- FR-A- 2 516 548
- US-A- 4 676 969
- Gmelins Hanbuch der Anorganischen Chemie, edition 8, 1973, no. 61, Silber part B3 - Verlag Chemie Gmbh Weinheim (DE), page 8, last paragraph

## Description

La présente invention concerne un procédé de fabrication de matériau constitué d'alliage d'argent noir-ci, l'alliage d'argent étant noirci dans la masse, procédé comportant l'exposition d'un alliage d'argent aux vapeurs sulfureuses.

Le brevet français n^{o} 2 516 548 décrit un procédé de fabrication de l'argent noirci dans la masse en proposant un certain nombre de variantes dont une comporte l'exposition d'un fil ou d'une feuille de faible épaisseur, de l'ordre de quelques dizaines de millimètres, aux vapeurs sulfureuses afin d'obtenir le noircissement de l'argent par diffusion gazeuse.

Afin de rendre le noircissement de l'argent plus rapide et pour augmenter l'efficacité de ce procédé, ce brevet propose d'augmenter la pression des vapeurs sulfureuses ainsi promouvant la diffusion de l'argent dans le soufre.

Le but de la présente invention est de rendre le procédé de fabrication plus efficace en ce qui concerne la capacité de production en même temps que l'on améliore aussi la qualité et la microstructure du produit final.

Selon la présente invention, ce but est obtenu par un procédé qui est caractérisé par le fait que l'on chauffe l'alliage d'argent à une température comprise entre 300°C et 700°C de préférence avant de le mettre en contact avec les vapeurs sulfureuses.

La plage de température entre 300°C et 700°C permet d'obtenir une qualité de la microstructure suffisante, la structure optimale étant atteinte avec une température entre 450°C-500°C. En dehors de la plage de 300-700°C, la structure n'est pas suffisamment bonne pour un usage du matériau dans la bijouterie, note étant prise que l'exigeance à la qualité du matériau est encore plus sévère dans l'horlogerie.

Selon une forme de réalisation de la présente invention l'alliage d'argent est utilisé en forme de fil, d'épaisseur variable, et en ce qui concerne la durée de la mise en contact dudit fil avec les vapeurs sulfureuses est fonction de l'épaisseur du fil de sorte à assurer le noircissement complet du fil ou des fils dans leurs masses.

Selon une autre forme de réalisation de la présente invention, l'alliage d'argent est utilisé en forme de feuille d'épaisseur variable, la durée de la mise en contact de ladite feuille avec les vapeurs sulfureuses étant également une fonction de l'épaisseur de cette feuille de sorte à assurer le noircissement complet de cette dernière en sa masse.

L'épaisseur des fils ou feuilles en alliage d'argent qui peuvent être utilisés dans un procédé selon la présente invention se situent entre environ 0,1 millimètre à quelques millimètres. En effet, il n'existe pas une limite inférieureen ce qui concerne l'épaisseur des fils ou des feuilles pour la mise en oeuvre de ce procédé sauf en ce qui concerne la facilité du traitement mécanique, et la limite supérieure de quelques millimètres est aussi une limite flottante car l'interdiffusion entre l'alliage d'argent et le soufre subit une certaine fonction dans le temps, et une épaisseur élevée du matériau de base entraîne uniquement une extension de la durée d'exposition. De cette façon, la limite supérieure ou la dimension du fil ou des fils ou des feuilles en alliage d'argent est dictée par des raisons d'optimisation et non pas par des contraintes techniques.

Le chauffage des fils ou des feuilles d'alliage d'argent s'effectue avantageusement par un chauffage électrique, chauffage électrique qui peut être constitué par le passage d'un courant électrique à travers l'alliage d'argent lui-même.

Nous allons décrire maintenant plus en détail le procédé de fabrication de l'alliage d'argent noirci selon la présente invention. Un alliage d'argent est mis en forme de fils ou de feuilles d'une épaisseur comprise entre 0,1 millimètre à quelques millimètres. Ce fil ou des fils ou ces feuilles sont disposés dans une enceinte et soumis à des vapeurs sulfureuses. Le fil ou les fils ou les feuilles d'alliage d'argent sont connectés électriquement à une source de courant afin d'être chauffés par le courant traversant l'alliage d'argent lui-même en créant de la chaleur ohmique, ou alternativement l'alliage d'argent peut être chauffé par une autre source de chaleur par conduction ou radiation. L'alliage d'argent est chauffé à une température comprise entre 300°C et entre 700°C de préférence et une fois cette température obtenue, l'enceinte dans laquelle se trouve le fil ou les fils ou les feuilles d'argent est remplie de vapeurs sulfureuses pour contacter l'alliage d'argent chauffé.

A ce propos, on notera qu'il est possible de soumettre l'alliage d'argent aux vapeurs sulfureuses à la pression atmosphérique ou mieux à une pression supérieure permettant d'obtenir un meilleur résultat dans un délai plus rapide.

La température de l'alliage d'argent se situant entre 300°C et 700°C est choisie de façon à assurer une diffusion optimale du soufre dans l'alliage d'argent, cette diffusion optimale se référant à la vitesse de diffusion et à la qualité de la microstructure de l'alliage d'argent noirci obtenu et le temps de l'exposition est choisi de façon telle que le noircissement, c'est-à-dire la réaction du soufre avec les cristaux de la structure de l'alliage d'argent peut se faire de façon uniforme à travers la section entière du fil ou de la feuille. Il est présumé que le fait de chauffer le matériau de base avant l'exposition au soufre permet une diffusion plus rapide, plus complète et plus uniforme, de façon à ne pas exposer les parties extérieures du fil ou de la feuille au soufre pendant une durée excessivement longue, ce qui pourrait avoir un effet négatif pour la qualité de la surface. La durée d'exposition optimale se situe entre une seconde et 10 minutes en fonction du diamètre d'un fil entre 0,1 mm et 5 mm, des durées entre 2 et 5 min pour un fil de 2 mm de diamètre étant typiques. Une durée trop courte laisse le centre du fil en état non transformé, une durée trop longue détériore la qualité. Cette microstructure est de sorte à assurer une qualité du matériau dont la surface est propre, sans la formation de différentes couches poreuse et dense ou pulvérulente dans le cas où la température n'est pas assez élevée ou encore de faible adhérence et quelquefois avec interface entre deux structures. Ainsi on peut utiliser le matériau ainsi obtenu directement pour la fabrication d'objets de toutes formes et de tous usages telles que dans la bijouterie, l'horlogerie, l'orfèvrerie ou d'autres professions.

Le matériau ainsi obtenu peut être utilisé tel quel pour former des objets en utilisant toute technique de déformation mécanique à froid ou à chaud et il peut être fondu pour le moulage des objets en forme spéciale. La fonte et la coulée de ce matériau ne produisent aucun effet de ségrégation ou autres détériorations de ces propriétés initiales telles que son utilisation n'est pas limitée par les procédés quelconques de fabrication des bijoux.

### EXEMPLE

Des fils d'alliage d'argent d'un diamètre de 2 millimètres sont introduits dans un récipient de traitement, dans lequel ils sont chauffés à une température de 450°C. Après avoir atteint cette température, l'enceinte est mise en communication avec des vapeurs sulfureuses par un procédé quelconque par exemple en la reliant à un conteneur comportant du soufre en ébullition d'une température d'environ 444°C. L'atmosphère entourant les fils en alliage d'argent est saturée en vapeur sulfureuse d'une température de 450°C à 500°C, et les fils d'alliage d'argent sont exposés à cette atmosphère pendant 4 minutes.

Après cette exposition, la communication entre l'enceinte et le conteneur de soufre fondu est interrompue, et les fils d'alliage d'argent sont refroidis dans l'ambiance chaude avant d'être retiré de l'enceinte, afin d'éviter toute détérioration de sa surface par l'oxygène, pendant son état chaud.

Les fils retirés de l'enceinte sont constitués de l'alliage d'argent noirci jusqu'au centre des fils, la surface des fils est lisse et brillante et aucun dépôt de faible adhérence ne peut être observé à la surface de ces fils.

Les fils sont fondus et coulés dans un moule de forme quelconque, la surface de l'objet coulé après démoulage est propre et ne nécessite aucun traitement, à l'exception d'un bref sablage.

L'invention a été décrite au moyen d'un exemple de réalisation mais elle n'est pas limitée à cet exemple. Au contraire, elle est susceptible de modifications et de variantes qui apparaîtront à l'homme de l'art, notamment en ce qui concerne la forme du matériau de départ autre que le fil ou la feuille, et également en ce qui concerne les températures et les durées d'exposition de l'alliage d'argent au soufre.

## Revendications

1. Procédé de fabrication d'un matériau constitué d'un alliage d'argent noirci, l'alliage d'argent étant noirci dans la masse, procédé comportant l'exposition de l'alliage d'argent au soufre en forme de vapeur sulfureuse, caractérisé en ce que l'on chauffe l'alliage d'argent à une température comprise entre 300°C et 700°C de préférence avant de le mettre en contact avec la vapeur sulfureuse.

2. Procédé selon la revendication 1, caractérisé en ce que l'alliage d'argent est chauffé à une température entre 450°C et 500°C.

3. Procédé selon les revendications 1 ou 2, caractérisé en ce que l'alliage d'argent est utilisé en forme de fil d'épaisseur variable et que la durée de la mise en contact dudit fil avec la vapeur sulfureuse est une fonction de l'épaisseur du fil de sorte à assurer le noircissement du fil dans la masse.

4. Procédé selon la revendication 1, caractérisé en ce que l'alliage d'argent est utilisé en forme de feuille d'épaisseur variable et en ce que la durée de la mise en contact de ladite feuille avec la vapeur sulfureuse est une fonction de l'épaisseur de la feuille de sorte à assurer le noircissement complet de la feuille en sa masse.

5. Procédé selon les revendications 1, 2 ou 3, caractérisé en ce que le diamètre du fil ou l'épaisseur de la feuille est comprise entre 0,1 millimètre et 5 millimètres.

6. Procédé selon l'une quelconque des revendications précédentes, caractérisé en ce que la durée d'exposition de l'alliage d'argent aux vapeurs de soufre, se situe entre environ une seconde et 10 minutes pour un matériel de base d'épaisseur comprise entre 0,1 mm et 5 mm.

7. Procédé selon l'une quelconque des revendications précédentes, caractérisé en ce que l'alliage d'argent est chauffé par chauffage électrique.

8. Procédé selon la revendication 7, caractérisé en ce que le chauffage d'alliage d'argent est effectué par le passage d'un courant électrique au travers de lui-même.

9. Procédé selon la revendication 7, caractérisé en ce que le chauffage de l'alliage d'argent peut s'effectuer par conduction ou radiation.

## Claims

1. Process for the manufacture of a material consisting of a blackened silver alloy, the silver alloy being blackened in bulk, process comprising the exposure of the silver alloy to sulphur in the form of sulphurous vapour, characterized in that the silver alloy is heated to a temperature of between 300°C and 700°C preferably before being placed in contact with the sulphurous vapour.

2. Process according to claim 1, characterized in that the silver alloy is heated to a temperature between 450°C and 500°C.

3. Process according to claim 1 or 2, charactorized in that the silver alloy is employed in the form of wire of variable thickness and that the period for which the said wire is placed in contact with the sulphurous vapour is a function of the thickness of the wire so as to ensure the blackening of the wire in bulk.

4. Process according to Claim 1, characterized in that the silver alloy is employed in the form of sheet of variable thickness and in that the period for which the said sheet is placed in contact with the sulphurous vapour is a function of the thickness of the sheet so as to encore the complete blackening of the sheet in its bulk.

5. Process according to Claim 1, 2 or 3, characterized in that the diameter of the wire or the thickness of the sheet is between 0.1 millimetre and 5 millimetres.

6. Process according to any one of the preceding claims, characterized in that the period of exposure of the silver alloy to the sulphur vapour lies between about one second and 10 minutes in the case of a base material of thickness between 0.1 mm and 5 mm.

7. Process according to any one of the preceding claims, characterized in that the silver alloy is heated by electrical heating.

8. Process according to Claim 7, characterized in that the heating of sliver alloy is carried out by the flow of an electrical current through itself.

9. Process according to Claim 7, characterized in that the heating of the silver alloy can be carried out by conduction or radiation.

## Patentansprüche

1. Verfahren zum Herstellen eines aus einer geschwärzten Silberlegierung bestehenden Materials, wobei die Silberlegierung in der Masse geschwärzt ist und das verfahren beinhaltet, daß die Silberlegierung Schwefel in Form von schwefelhaltigem Dampf ausgesetzt wird, dadurch gekennzeichnet, daß die Silberlegierung auf eine Temperatur von vorzugsweise zwischen 300°C und 700°C erwärmt wird, bevor sie mit dem schwefelhaltigen Dampf in Kontakt gebracht wird.

2. Verfahren nach Anspruch 1, dadurch gekennzeichnet, daß die Silberlegierung auf eine Temperatur zwischen 450°C und 500°C erwärmt wird.

3. Verfahren nach Anspruch 1 oder 2, dadurch gekennzeichnet, daß die Silberlegierung in Form eines Drahtes veränderlicher Dicke verwendet wird und daß die Zeitdauer, während der der besagte Draht mit dem schwefelhaltigen Dampf in Kontakt steht, von der Dicke des Drahts abhängt, so daß die Schwärzung des Drahtes in der Masse gewährleistet ist.

4. Verfahren nach Anspruch 1, dadurch gekennzeichnet, daß die Silberlegierung in Form einer Folie veränderlicher Dicke verwendet wird und daß die Zeitdauer, während der die besagte Folie mit dem schwefelhaltigen Dampf in Kontakt steht, von der Dicke der Folie abhängt, so daß eine vollständige Schwärzung der Folie in der Masse gewährleistet ist.

5. Verfahren nach Anspruch 1, 2 oder 3, dadurch gekennzeichnet, daß der Durchmesser des Drahtes oder die Dicke der Folie zwischen 0,1 mm und 5 mm liegt.

6. Verfahren nach einem der vorangehenden Ansprüche, dadurch gekennzeichnet, daß die Zeitdauer, während der die Silberlegierung den Schwefeldämpfen ausgesetzt ist, für ein Ausgangsmaterial mit einer Dicke zwischen 0,1 mm und 5 mm zwischen etwa 1 Sekunde und 10 Minuten liegt.

7. Verfahren nach einem der vorangehenden Ansprüche, dadurch gekennzeichnet, daß die Silberlegierung durch elektrisches Beheizen erwärmt wird.

8. Verfahren nach Anspruch 7, dadurch gekennzeichnet, daß die Erwärmung der Silberlegierung durch den Durchgang eines elektrischen Stroms durch diese selbst bewirkt wird.

9. Verfahren nach Anspruch 7, dadurch gekennzeichnet, daß die Erwärmung der Silberlegierung durch Leitung oder Strahlung bewirkt wird.
